# EUROPEAN PATENT SPECIFICATION

(11) **EP 2 439 852 B1**
(45) Date of publication and mention of the grant of the patent: **03.04.2019**
(21) Application number: 10811166.7
(22) Date of filing: 24.05.2010
(51) Int. Cl.: H04B 1/16, H01Q 1/10, H01Q 1/24, H04W 52/02

(54) **METHOD FOR SAVING TERMINAL ELECTRICITY AND TERMINAL**
STROMSPARVERFAHREN FÜR EIN ENDGERÄT UND ENDGERÄT
PROCÉDÉ D'ÉCONOMIE D'ÉLECTRICITÉ DE TERMINAL ET TERMINAL

(30) Priority: 25.08.2009 CN 200910091780
(43) Date of publication of application: 11.04.2012
(73) Proprietor: ZTE Corporation, Shenzhen City, Guangdong Province 518057 (CN)
(72) Inventor: ZHANG, Bing, Shenzhen City, Guangdong Province 518057 (CN); YANG, Xi, Shenzhen City, Guangdong Province 518057 (CN); WEI, Xin, Shenzhen City, Guangdong Province 518057 (CN)
(74) Representative: Murgitroyd & Company
(86) International application number: PCT/CN2010/073149
(87) International publication number: WO 2011/023006

(56) References cited:
- CN-A- 1 417 955
- CN-A- 101 645 715
- CN-Y- 201 191 903
- US-A- 6 064 341
- US-A1- 2008 021 634
- US-A1- 2008 074 329
- US-A1- 2009 072 954
- US-B1- 6 198 444
- US-B1- 6 486 835
- US-B1- 7 356 351
- US-B2- 6 597 930
- US-B2- 7 421 289

## Description

### Technical Field

The present disclosure relates to the communication field, and particularly, to a method for saving power of terminal and a terminal.

### Background of the Related Art

Mobile terminals such as mobile phones, data cards as daily communication tools for people are already very popular, and the functions and performances thereof become more powerful, for example, a color screen, a high resolution, Bluetooth, a smart operating system etc. for the mobile phones, and various standards with more powerful functions such as General Packet Radio Service (GPRS), Enhanced Data Rate for GSM Evolution (EDGE), High Speed Downlink Packet Access (HSDPA), High Speed Uplink Packet Access (HSUPA) etc. for the data cards. The more powerful and abundant functions and performances of the mobile terminals such as mobile phones, data cards make the power consumption of the mobile terminals increase. On the other hand, for the mobile terminals such as 2G, 3G and 4G mobile phones, data cards, it is necessary to use a telescopic antenna due to restrictions such as the environment, appearances etc. When the antenna is pulled out, the power amplification of these mobile terminals which use the telescopic antenna is often in a better operating state, and the power consumption is substantially normal; when the telescopic antenna is retracted, the power amplification is substantially in a mismatch state, and at this time, the power consumption is much higher than that when the telescopic antenna is pulled out, and this power consumption is unnecessary, which wastes the battery power of the mobile terminals.

Currently, the general solution is to increase the capacity of batteries of the mobile terminals, while the bottleneck of the battery technology makes standby time of the mobile terminals very limited, resulting in a sharp decline of the battery power after the mobile terminals are frequently used, which makes the mobile terminals loss deserved basic functions, and affects the use of mobile terminals. Therefore, how to reduce the power consumption so as to save the battery power of the mobile terminals becomes an urgent problem to be solved.

An example of prior art method is described in US 7356351 B1 (SHAN NITIN J [US]) 8 April 2008 (2008-04-08), and relevant technologies are also known from US 2008/074329 A1 (CABALLERO RUBEN [US] ET AL) 27 March 2008 (2008-03-27), US 2008/021634 A1 (DIAZ MELVIN B[US]) 24 January 2008 (2008-01-24), US 2009/072954 A1 (KIM STEPHEN M [CN] ET AL) 19 March 2009 (2009-03-19), US 6064341 A (HASSEMER BRIAN JON [US]) 16 May 2000 (2000-05-16), US7421289 B2 (WIETZKE JOACHIM [DE] ET AL) 2 September 2008 (2008-09-02), US 6198444B1 (SAILSMAN MICHAEL E[US] ET AL) 6 March 2001 (2001-03-06) and US 6597930 B2 (NAKAMURA ATSUNORI [JP] ET AL) 22 July 2003 (2003-07-22).

### Summary

In view of this, the main purpose of the present disclosure is to provide a method for saving power of terminal and a terminal, which can reduce the power consumption of the terminal to achieve the purpose of saving the battery power as defined in the attached independent claims.

In order to achieve the above propose, the technical solution of the present document can be implemented as follows:
The present document provides a terminal, which comprises: a telescopic antenna, a control unit and a radio frequency unit, wherein,
the telescopic antenna is used to generate a pulled-out or retraction state;
the control unit is used to be connected with or disconnected from the radio frequency unit according to the pulled-out or retraction state of the telescopic antenna; and
the radio frequency unit is used to be connected with or disconnected from the control unit.

The terminal further comprises a detection circuit unit and a feedback signal contact, wherein,
the detection circuit unit is used to output a high level to a programming controllable input and output (GPIO) interface of the control unit;
the feedback signal contact is connected with the GPIO interface of the control unit, and is used to be disconnected from the telescopic antenna and be in a high level state together with the GPIO interface when the telescopic antenna is in a pulled-out state, and to be connected with the telescopic antenna and be in a low level state together with the GPIO interface when the telescopic antenna is in a retraction state; and
the telescopic antenna and the feedback signal contact are located at the telescopic antenna unit.

The detection circuit unit further comprises: a pull-up resistor and a power supply.

The power supply outputs a high level to the GPIO interface through the pull-up resistor.

The detection circuit unit further comprises a shunt inductor and the telescopic antenna unit further comprises an antenna feed point;

The shunt inductor is connected with the antenna feed point; and the antenna feed point is connected with the telescopic antenna;

The shunt inductor is used to match the operating impedances of the telescopic antenna and the radio frequency unit and achieve the interaction between the radio frequency unit by a high frequency signal and the telescopic antenna through the antenna feed point when the telescopic antenna is in the pulled-out state; and the shunt inductor and the antenna feed point are used to achieve the connection between the GPIO interface and the ground when the telescopic antenna is in the retraction state.

The control unit is further used to be connected with or disconnected from the radio frequency unit according to the high level or low level state of the GPIO interface;
the radio frequency unit is further used to become into an opening state and interact with the telescopic antenna by the high frequency signal when being connected with the control unit, and become into a closing state when being disconnected from the control unit;
accordingly, the telescopic antenna is further used to transform the received high frequency signal into a wireless signal for transmission when the radio frequency unit becomes into an opening state, and is further used to transform the received wireless signal into a high frequency signal and provide it to the radio frequency unit.

The present document further provides a method for saving power of terminal, which comprises:
a control unit being connected with a radio frequency unit when a telescopic antenna is in a pulled-out state; and
the control unit being disconnected from the radio frequency unit when the telescopic antenna is in a retraction state.

The method further comprises: a power supply of a detection circuit unit outputting a high level to a GPIO interface of the control unit through a pull-up resistor continually;
accordingly, when the telescopic antenna is in a pulled-out state, the method further comprises: the telescopic antenna being disconnected from a feedback signal contact, and the GPIO interface and the feedback signal contact connected therewith being in a high level state;
when the telescopic antenna is in a retraction state, the method further comprises: the telescopic antenna being connected with the feedback signal contact, and the GPIO interface and the feedback signal contact connected therewith being in a low level state.

Further, the GPIO interface and the feedback signal contact being in the low level state, particularly,
the GPIO interface is connected with the telescopic antenna through the feedback signal contact according to the conductive properties of metal materials of the telescopic antenna when the telescopic antenna is connected with the feedback signal contact, and the GPIO interface is connected with the ground through the antenna feed point connected with the telescopic antenna according to the direct-current conductive properties of the shunt inductor in the detection circuit unit, and the GPIO interface and the feedback signal contact are in a low level state.

Further, the control unit being connected with the radio frequency unit particularly is that the control unit is connected with the radio frequency unit according to the high level state of the GPIO interface.

After the control unit is connected with the radio frequency unit, the method further comprises:
opening the radio frequency unit;
accordingly, the radio frequency unit transforming the low frequency signal provided by the control unit into a high frequency signal, and providing it to the telescopic antenna; after transforming the high frequency signal into a wireless signal, the telescopic antenna transmitting the wireless signal;
alternatively, after transforming the received wireless signal into a high frequency signal, the telescopic antenna providing it to the radio frequency unit; after transforming the high frequency signal into a low frequency signal, the radio frequency unit providing it to the control unit for processing.

Further, the radio frequency unit providing the high frequency signal to the telescopic antenna or the telescopic antenna providing the high frequency signal to the radio frequency unit particularly is that
after matching the operating impedances of the telescopic antenna and the radio frequency unit by the shunt inductor of the detection circuit unit, the radio frequency unit providing the high frequency signal to the telescopic antenna through the antenna feed point connected with the telescopic antenna, or the telescopic antenna providing the high frequency signal to the radio frequency unit through the antenna feed point.

Further, the control unit being disconnected from the radio frequency unit particularly is that the control unit is disconnected from the radio frequency unit according to the low level state of the GPIO interface.

After the control unit is disconnected from the radio frequency unit, the method further comprises: closing the radio frequency unit.

In the solution of power saving of the present disclosure, the control unit controls the opening of the radio frequency unit and transmits and receives the wireless signal through the telescopic antenna when the telescopic antenna is pulled out; and the control unit controls the closing of the radio frequency unit, and the terminal is also in a standby or off state when the telescopic antenna is retracted. This can minimize the power consumption of the radio frequency unit, so as to save the battery power of the terminal.

### Brief Description of Drawings

Fig. 1 is a flowchart of the method for saving power of terminal of the present disclosure;
Fig. 2 is an internal structure diagram of the terminal when the telescopic antenna is pulled out;
Fig. 3 is an internal structure diagram of the terminal when the telescopic antenna is retracted;
Fig. 4 illustrates a structural diagram of the terminal to which the method for saving power of terminal is adapted.

### Detailed Description

The technical solution of the present disclosure is further described in detail in combination with the accompanying drawings and examples hereinafter.

The solution of saving power of terminal of the present disclosure is to control the opening or closing state of the radio frequency unit according to the pulled-out or retraction state of the telescopic antenna, to achieve the purpose of reducing the power consumption of the terminal and saving the battery power.

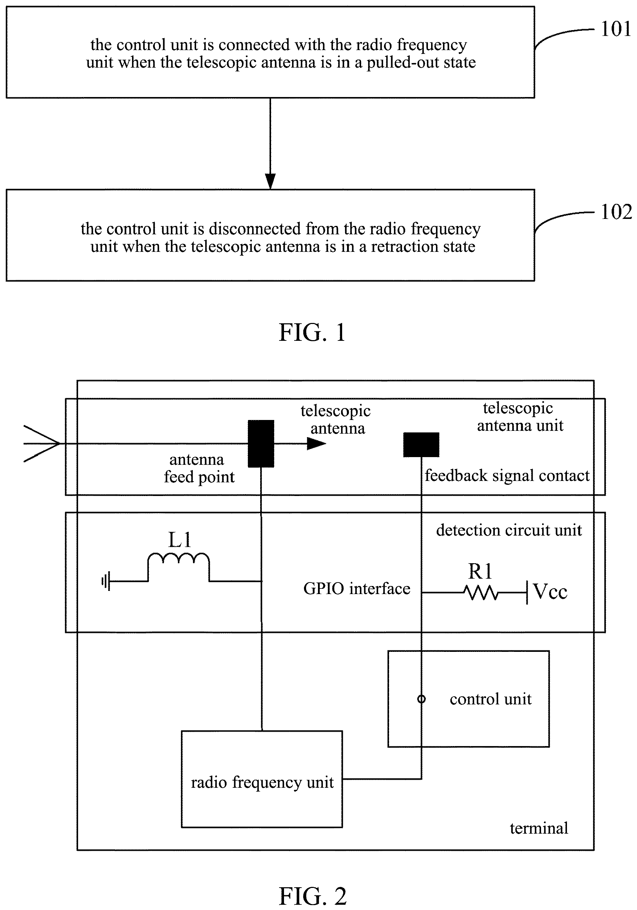

Fig. 1 is a flow of the method for saving power of terminal of the present disclosure, which comprises:
Step 101: the control unit being connected with the radio frequency unit when the telescopic antenna is in a pulled-out state;
Step 102: the control unit being disconnected from the radio frequency unit when the telescopic antenna is in a retraction state.

The solution of saving power of the present disclosure will be illustrated in combination with the internal structure of the terminal hereinafter.

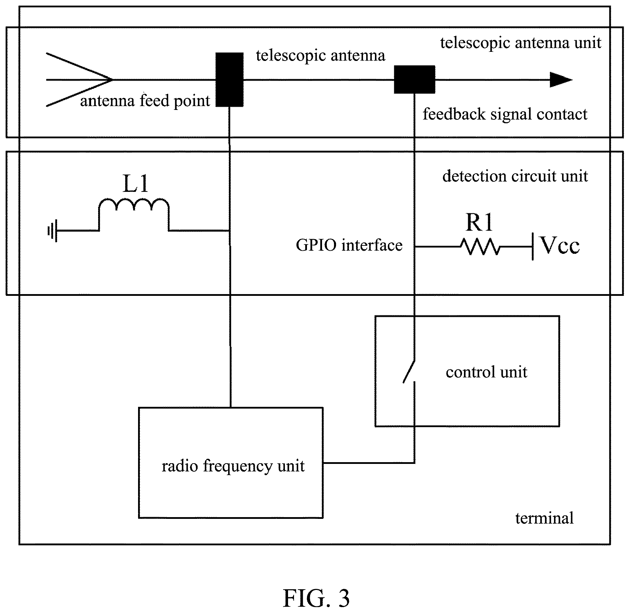

Fig. 2 is an internal structure diagram of the terminal when the telescopic antenna is pulled out; and Fig. 3 is an internal structure diagram of the terminal when the telescopic antenna is retracted. Wherein, the telescopic antenna unit comprises a telescopic antenna, an antenna feed point and a feedback signal contact. The feedback signal contact is connected with the programming controllable input and output (GPIO) interface of the control unit, the GPIO interface is further connected with a power supply Vcc through the pull-up resistor R1 of a detection circuit unit, and the power supply Vcc outputs a high level to the GPIO interface through R1 continually.

Step 101 will be illustrated in detail in combination with Fig. 2 hereinafter. As shown in Fig. 2, the telescopic antenna is disconnected from a feedback signal contact when the telescopic antenna is pulled out; meanwhile, both the GPIO interface and the feedback signal contact are in a high level state. The control unit is connected with the Radio frequency unit according to the high level state of the GPIO interface, and outputs the low frequency signal such as the audio frequency to the radio frequency unit, which will be transformed into a high frequency signal. The radio frequency unit is in an opening state, and at this time, the corresponding terminal is in an operating state. The high frequency signal reaches the telescopic antenna through the antenna feed point of the detection circuit unit, and the telescopic antenna transforms the high frequency signal into a wireless signal in the form of electro-magnetic wave for transmission. Alternatively, after transforming the received wireless signal into a high frequency signal which can be processed by the radio frequency unit, the telescopic antenna transmits the transformed signal to the radio frequency unit through the antenna feed point. After transforming the high frequency signal into a low frequency signal again, the radio frequency unit provides this transformed signal to the control unit for processing and the reception of the wireless signal is completed.

In this process, the shunt inductor L1 of the detection circuit unit plays a role of matching the Radio frequency unit: because the operating impedances of the radio frequency unit and the telescopic antenna are different, L1 can match the impedance of the Radio frequency unit and the impedance of the telescopic antenna, which ensures the normal operation of the both, so as to achieve the reception and transmission of the wireless signal.

Step 102 will be illustrated in detail in combination with Fig. 3 hereinafter. As shown in Fig. 3, when the telescopic antenna is retracted, the telescopic antenna is connected with the feedback signal contact, and at this time, the GPIO interface is connected with the telescopic antenna through the feedback signal contact according to the conductive properties of metal materials of the telescopic antenna, so as to be connected with the antenna feed point, and is connected with the ground according to the direct-current conductive properties of the L1 inductor, and then the GPIO interface is in a low level state, and at this time, the feedback signal contact is also in a low level state. The control unit is disconnected from the Radio frequency unit according to the low level state of the GPIO interface, and at this time, the Radio frequency unit will no longer interact with the control unit by the low frequency signal and perform transformation of the high frequency signal, i.e., the Radio frequency unit is in a closing state, which saves the power consumption of the Radio frequency unit; accordingly, at this time, the terminal performs standby or off processing instead of the transmission and reception of the wireless signal.

Thus, in the solution of power saving of the present disclosure, the Radio frequency unit is open and transmits and receives the wireless signal through the telescopic antenna when the telescopic antenna is pulled out; and when the telescopic antenna is retracted, the Radio frequency unit is closed and the terminal is also in a standby or off state, which can minimize the power consumption of the Radio frequency unit, so as to save the battery powe of the terminal.

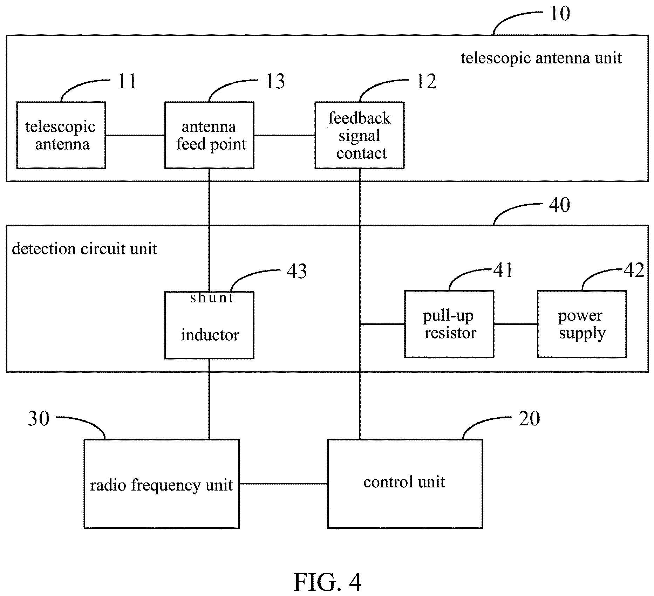

In order to achieve the above method for saving power, the present disclosure provides a terminal as shown in Fig. 4, which comprises a telescopic antenna 11, a control unit 20 and a radio frequency unit 30, wherein,
the telescopic antenna 11 is used to generate a pulled-out or retraction state;
the control unit 20 is used to be connected with or disconnected from the radio frequency unit 30 according to the pulled-out or retraction state of the telescopic antenna 11; and
the radio frequency unit 30 is used to be connected with or disconnected from the control unit 20.

The terminal further comprises a detection circuit unit 40 and a feedback signal contact 12.

The detection circuit unit 40 is used to output a high level to a GPIO interface of the control unit 20 continually.

The feedback signal contact 12 is connected with the GPIO interface of the control unit 20. The feedback signal contact 12 is used to be disconnected from the telescopic antenna 11 when the telescopic antenna 11 is in a pulled-out state and be in a high level state together with the GPIO interface; and to be connected with the telescopic antenna 11 when the telescopic antenna 11 is in a retraction state, and be in a low level state together with the GPIO interface.

The telescopic antenna 11 and the feedback signal contact 12 are located at the telescopic antenna unit 10.

The detection circuit unit 40 further comprises: a pull-up resistor 41 and a power supply 42.

The power supply 42 outputs a high level to the GPIO interface through the pull-up resistor 41 continually.

The detection circuit unit 40 further comprises: a shunt inductor 43; the telescopic antenna unit 10 further comprises: an antenna feed point 13; the shunt inductor 43 is connected with the antenna feed point 13; and the antenna feed point 13 is connected with the telescopic antenna 11.

The shunt inductor 43 is used to match the operating impedances of the telescopic antenna 11 and the radio frequency unit 30 and achieve the interaction between the radio frequency unit 30 and the telescopic antenna 11 by a high frequency signal through the antenna feed point 13, when the telescopic antenna 11 is in the pulled-out state; the shunt inductor 43 and the antenna feed point 13 are used to achieve the connection between the GPIO interface and the ground when the telescopic antenna 11 is in the retraction state.

The control unit 20 is further used to be connected with or disconnected from the radio frequency unit 30 according to the high level or low level state of the GPIO interface.

The radio frequency unit 30 is further used to become into an opening state and interact with the telescopic antenna 11 by the high frequency signal when it is connected with the control unit 20, and become into a closing state when it is disconnected from the control unit 20.

Accordingly, the telescopic antenna 11 is further used to transform the received high frequency signal into a wireless signal for transmission when the radio frequency unit 30 becomes into an opening state, and is further used to transform the received wireless signal into a high frequency signal and provide it to the radio frequency unit 30.

The above description is only the preferred examples of the present disclosure and is not intended to limit the protection scope of the appended claims.

## Claims

1. A terminal, comprising: a telescopic antenna unit (10), a detection circuit unit (40), a control unit (20) and a radio frequency unit (30), wherein the telescopic antenna unit comprises a telescopic antenna (11), an antenna feed point(13) and a feedback signal contact (12), wherein the antenna feed point is connected with the telescopic antenna;
the control unit is configured to be connected with the feedback signal contact; and
the radio frequency unit is configured to be connected with the antenna feed point;
wherein when being in a pulled-out state, the telescopic antenna is disconnected from the feedback signal contact, a high level state of the feedback signal contact is detected by the control unit, and the control unit is electrically coupled to the radio frequency unit; when being in a retraction state, the telescopic antenna is connected with the feedback signal contact, a low level state of feedback signal contact is detected by the control unit, the control unit is electrically disconnected from the radio frequency unit;
wherein the detection circuit unit further comprises a pull-up resistor (41) and a power supply (42),
the power supply outputs a high level to a programming controllable input and output, GPIO, interface of the control unit through the pull-up resistor when the telescopic antenna is in the pulled-out state;
wherein the detection circuit unit further comprises a shunt inductor (43),
the shunt inductor is connected with the antenna feed point;
when the telescopic antenna is in the pulled-out state, the shunt inductor is adapted to match operating impedances of the telescopic antenna and the radio frequency unit and achieve an interaction of a high frequency signal between the radio frequency unit and the telescopic antenna through the antenna feed point; and when the telescopic antenna is in the retraction state, the shunt inductor and the antenna feed point are adapted to achieve an electrical connection between the GPIO interface and ground.

2. The terminal according to claim 1, wherein,
the telescopic antenna is further adapted to transform a received high frequency signal into a wireless signal for transmission when the radio frequency unit is electrically coupled to the control unit; and transform a received wireless signal into a high frequency signal to provide to the radio frequency unit.

3. A method for saving power of a terminal of claim 1 or claim 2, comprising the steps of:
when the telescopic antenna is in the pulled-out state, the control unit being electrically connected with the radio frequency unit; and
when the telescopic antenna is in the retraction state, the control unit being electrically disconnected from the radio frequency unit, to save power of the terminal.

4. The method according to claim 3, further comprising the steps of:
when the telescopic antenna is in the pulled-out state, the telescopic antenna being electrically disconnected from the feedback signal contact, and the GPIO interface and the feedback signal contact connected therewith being in the high level state; and
when the telescopic antenna is in the retraction state, the telescopic antenna being electrically connected with the feedback signal contact, and the GPIO interface and the feedback signal contact connected therewith being in the low level state.

5. The method according to claim 3, wherein when the control unit is electrically connected with the radio frequency unit;
the radio frequency unit transforming a low frequency signal provided by the control unit into a high frequency signal to provide to the telescopic antenna, and the telescopic antenna transforming the high frequency signal into a wireless signal for transmission; or
the telescopic antenna transforming a received wireless signal into a high frequency signal to provide to the radio frequency unit, and the radio frequency unit transforming the high frequency signal into a low frequency signal to provide to the control unit for processing.

6. The method according to claim 5, wherein after the shunt inductor of the detection circuit unit matches operating impedances of the telescopic antenna and the radio frequency unit, the radio frequency unit providing the high frequency signal to the telescopic antenna through the antenna feed point connected with the telescopic antenna, or the telescopic antenna providing the high frequency signal to the radio frequency unit through the antenna feed point.

## Patentansprüche

1. Ein Endgerät, das Folgendes beinhaltet: eine Teleskopantenneneinheit (10), eine Detektionsschaltungseinheit (40), eine Steuerungseinheit (20) und eine Funkfrequenzeinheit (30), wobei
die Teleskopantenneneinheit eine Teleskopantenne (11), einen Antennenspeisepunkt (13) und einen Rückkopplungssignalkontakt (12) beinhaltet, wobei der Antennenspeisepunkt mit der Teleskopantenne verbunden ist;
die Steuerungseinheit konfiguriert ist, um mit dem Rückkopplungssignalkontakt verbunden zu werden; und
die Funkfrequenzeinheit konfiguriert ist, um mit dem Antennenspeisepunkt verbunden zu werden;
wobei, wenn sie sich in einem herausgezogenen Zustand befindet, die Teleskopantenne von dem Rückkopplungssignalkontakt getrennt ist, ein Hochpegelzustand des Rückkopplungssignalkontakts von der Steuerungseinheit detektiert wird und die Steuerungseinheit mit der Funkfrequenzeinheit elektrisch gekoppelt ist; wenn sie sich in einem eingefahrenen Zustand befindet, die Teleskopantenne mit dem Rückkopplungssignalkontakt verbunden ist, ein Niedrigpegelzustand des Rückkopplungssignalkontakts von der Steuerungseinheit detektiert wird, die Steuerungseinheit von der Funkfrequenzeinheit elektrisch getrennt ist;
wobei die Detektionsschaltungseinheit ferner einen Pull-up-Widerstand (41) und eine Stromversorgung (42) beinhaltet,
die Stromversorgung einen Hochpegel an eine steuerbare Eingabe- und Ausgabe-Programmierschnittstelle, GPIO-Schnittstelle, der Steuerungseinheit über den Pull-up-Widerstand ausgibt, wenn sich die Teleskopantenne in dem herausgezogenen Zustand befindet;
wobei die Detektionsschaltungseinheit ferner einen Nebenschlussinduktor (43) beinhaltet,
der Nebenschlussinduktor mit dem Antennenspeisepunkt verbunden ist;
wenn sich die Teleskopantenne in dem herausgezogenen Zustand befindet, der Nebenschlussinduktor angepasst ist, um Betriebsimpedanzen der Teleskopantenne und der Funkfrequenzeinheit abzugleichen und eine Interaktion eines Hochfrequenzsignals zwischen der Funkfrequenzeinheit und der Teleskopantenne über den Antennenspeisepunkt zu erreichen; und wenn sich die Teleskopantenne in dem eingefahrenen Zustand befindet, der Nebenschlussinduktor und der Antennenspeisepunkt angepasst sind, um eine elektrische Verbindung zwischen der GPIO-Schnittstelle und Masse zu erreichen.

2. Endgerät gemäß Anspruch 1, wobei
die Teleskopantenne ferner angepasst ist, um ein empfangenes Hochfrequenzsignal in ein drahtloses Signal zur Übertragung zu transformieren, wenn die Funkfrequenzeinheit mit der Steuerungseinheit elektrisch gekoppelt ist; und ein empfangenes drahtloses Signal in ein Hochfrequenzsignal zu transformieren, um es der Funkfrequenzeinheit bereitzustellen.

3. Ein Verfahren zum Sparen von Strom eines Endgeräts gemäß Anspruch 1 oder Anspruch 2, das die folgenden Schritte beinhaltet:
wenn sich die Teleskopantenne in dem herausgezogenen Zustand befindet, die Steuerungseinheit mit der Funkfrequenzeinheit elektrisch verbunden wird; und
wenn sich die Teleskopantenne in dem eingefahrenen Zustand befindet, die Steuerungseinheit von der Funkfrequenzeinheit elektrisch getrennt wird, um Strom des Endgeräts zu sparen.

4. Verfahren gemäß Anspruch 3, das ferner die folgenden Schritte beinhaltet:
wenn sich die Teleskopantenne in dem herausgezogenen Zustand befindet, die Teleskopantenne von dem Rückkopplungssignalkontakt elektrisch getrennt wird und sich die GPIO-Schnittstelle und der damit verbundene Rückkopplungssignalkontakt in dem Hochpegelzustand befinden; und
wenn sich die Teleskopantenne in dem eingefahrenen Zustand befindet, die Teleskopantenne mit dem Rückkopplungssignalkontakt elektrisch verbunden wird und sich die GPIO-Schnittstelle und der damit verbundene Rückkopplungssignalkontakt in dem Niedrigpegelzustand befinden.

5. Verfahren gemäß Anspruch 3, wobei, wenn die Steuerungseinheit mit der Funkfrequenzeinheit elektrisch verbunden ist,
die Funkfrequenzeinheit ein Niedrigfrequenzsignal, das von der Steuerungseinheit bereitgestellt wird, in ein Hochfrequenzsignal transformiert, um es der Teleskopantenne bereitzustellen, und die Teleskopantenne das Hochfrequenzsignal in ein drahtloses Signal zur Übertragung transformiert; oder
die Teleskopeinheit ein empfangenes drahtloses Signal in ein Hochfrequenzsignal transformiert, um es der Funkfrequenzeinheit bereitzustellen, und die Funkfrequenzeinheit das Hochfrequenzsignal in ein Niedrigfrequenzsignal transformiert, um es der Steuerungseinheit zum Verarbeiten bereitzustellen.

6. Verfahren gemäß Anspruch 5, wobei, nachdem der Nebenschlussinduktor der Detektionsschaltungseinheit Betriebsimpedanzen der Teleskopantenne und der Funkfrequenzeinheit abgeglichen hat, die Funkfrequenzeinheit der Teleskopantenne das Hochfrequenzsignal über den Antennenspeisepunkt bereitstellt, der mit der Teleskopantenne verbunden ist, oder die Teleskopantenne der Funkfrequenzeinheit das Hochfrequenzsignal über den Antennenspeisepunkt bereitstellt.

## Revendications

1. Un terminal, comprenant : une unité d'antenne télescopique (10), une unité de circuit de détection (40), une unité de commande (20) et une unité radiofréquence (30), dans lequel
l'unité d'antenne télescopique comprend une antenne télescopique (11), un point d'alimentation d'antenne (13) et un contact de signal de rétroaction (12), le point d'alimentation d'antenne étant connecté à l'antenne télescopique ;
l'unité de commande est configurée pour être connectée au point de signal de rétroaction ; et
l'unité radiofréquence est configurée pour être connectée au point d'alimentation d'antenne ;
dans lequel quand elle est dans un état déployé, l'antenne télescopique est déconnectée du contact de signal de rétroaction, un état niveau haut du contact de signal de rétroaction est détecté par l'unité de commande, et l'unité de commande est électriquement couplée à l'unité radiofréquence ; quand elle est dans un état de rétraction, l'antenne télescopique est connectée au contact de signal de rétroaction, un état niveau bas de contact de signal de rétroaction est détecté par l'unité de commande, l'unité de commande est électriquement déconnectée de l'unité radiofréquence ;
dans lequel l'unité de circuit de détection comprend en outre une résistance d'excursion haute (41) et une alimentation électrique (42),
l'alimentation électrique délivre un niveau haut à une interface d'entrée-sortie GPIO commandable par programmation de l'unité de commande par l'intermédiaire de la résistance d'excursion haute quand l'antenne télescopique est dans l'état déployé ; dans lequel l'unité de circuit de détection comprend en outre une bobine d'inductance shunt (43),
la bobine d'inductance shunt est connectée au point d'alimentation d'antenne ;
quand l'antenne télescopique est dans l'état déployé, la bobine d'inductance shunt est conçue pour adapter des impédances de fonctionnement de l'antenne télescopique et de l'unité radiofréquence et réaliser une interaction d'un signal haute fréquence entre l'unité radiofréquence et l'antenne télescopique par l'intermédiaire du point d'alimentation d'antenne ; et quand l'antenne télescopique est dans l'état de rétraction, la bobine d'inductance shunt et le point d'alimentation d'antenne sont conçus pour réaliser une connexion électrique entre l'interface GPIO et la masse.

2. Le terminal selon la revendication 1, dans lequel,
l'antenne télescopique est en outre conçue pour transformer un signal haute fréquence reçu en un signal sans fil pour une émission quand l'unité radiofréquence est électriquement couplée à l'unité de commande ; et transformer un signal sans fil reçu en un signal haute fréquence à fournir à l'unité radiofréquence.

3. Un procédé pour économiser l'énergie d'un terminal de la revendication 1 ou de la revendication 2, comprenant les étapes suivantes :
quand l'antenne télescopique est dans l'état déployé, l'unité de commande est électriquement connectée à l'unité radiofréquence ; et
quand l'antenne télescopique est dans l'état de rétraction, l'unité de commande est électriquement déconnectée de l'unité radiofréquence, afin d'économiser l'énergie du terminal.

4. Le procédé selon la revendication 3, comprenant en outre les étapes suivantes :
quand l'antenne télescopique est dans l'état déployé, l'antenne télescopique est électriquement déconnectée du contact de signal de rétroaction, et l'interface GPIO et le contact de signal de rétroaction qui lui est connecté sont dans l'état niveau haut ; et
quand l'antenne télescopique est dans l'état de rétraction, l'antenne télescopique est électriquement connectée au contact de signal de rétroaction, et l'interface GPIO et le contact de signal de rétroaction qui lui est connecté sont dans l'état niveau bas.

5. Le procédé selon la revendication 3, dans lequel quand l'unité de commande est électriquement connectée à l'unité radiofréquence :
l'unité radiofréquence transforme un signal basse fréquence fourni par l'unité de commande en un signal haute fréquence à fournir à l'antenne télescopique, et l'antenne télescopique transforme le signal haute fréquence en un signal sans fil pour une émission ; ou
l'antenne télescopique transforme un signal sans fil reçu en un signal haute fréquence à fournir à l'unité radiofréquence, et l'unité radiofréquence transforme le signal haute fréquence en un signal basse fréquence à fournir à l'unité de commande pour un traitement.

6. Le procédé selon la revendication 5, dans lequel après que la bobine d'inductance shunt de l'unité de circuit de détection a adapté les impédances de fonctionnement de l'antenne télescopique et de l'unité radiofréquence, l'unité radiofréquence fournit le signal haute fréquence à l'antenne télescopique par l'intermédiaire du point d'alimentation d'antenne connecté à l'antenne télescopique, ou l'antenne télescopique fournit le signal haute fréquence à l'unité radiofréquence par l'intermédiaire du point d'alimentation d'antenne.
